# EUROPÄISCHE PATENTSCHRIFT

(11) **EP 4 043 192 B1**
(45) Veröffentlichungstag und Bekanntmachung des Hinweises auf die Patenterteilung: **01.04.2026**
(21) Anmeldenummer: 22151369.0
(22) Anmeldetag: 13.01.2022
(51) Int. Cl.: B29C 73/10, B64D 45/02, B64F 5/40

(54) **SCHNELLREPARATURPATCH ZUM AUSBESSERN VON ÄUSSEREN BESCHÄDIGUNGEN SOWIE SCHNELLREPARATURVERFAHREN**
QUICK REPAIR PATCH FOR REPAIRING EXTERNAL DAMAGE, AND QUICK REPAIR METHOD
PATCH DE RÉPARATION RAPIDE PERMETTANT DE RÉPARER DES DOMMAGES EXTÉRIEURS, AINSI QUE PROCÉDÉ DE RÉPARATION RAPIDE

(30) Priorität: 28.01.2021 DE 102021101981
(43) Veröffentlichungstag der Anmeldung: 17.08.2022
(73) Patentinhaber: Airbus Operations GmbH, 21129 Hamburg (DE)
(72) Erfinder: Weber, Lutz, 21129 Hamburg (DE); Kaste, Michael, 21129 Hamburg (DE)

(56) Entgegenhaltungen:
- US-A1- 2009 114 427
- US-A1- 2010 132 875

## Beschreibung

Die Erfindung betrifft ein Schnellreparaturpatch, vorzugsweise für Luftfahrzeuge, sowie ein Schnellreparaturverfahren. Ferner betrifft die Erfindung eine Reparaturanordnung sowie Verwendungen eines Schnellreparaturpatches.

Zivile und militärische Flugzeuge, Helikopter und Drohnen sowie Kraftfahrzeuge, Schiffe und Windturbinen (bzw. deren Rotorblätter) werden gewöhnlich aus Metall oder Verbundmaterialien hergestellt. Im Fall eines Blitzeinschlages können Reparaturen erforderlich sein. Der häufigste Schadenstyp beim Blitzeinschlag ist eine lediglich oberflächliche Beschädigung, d. h. Beschädigungen an Farbe und möglicherweise wenigen tieferliegenden Schichten. Dabei entstehen in der Regel keine signifikanten Materialbeschädigungen, welche die Struktur beeinträchtigen können.

Nach einem solchen Vorfall werden derartige lokale und strukturmechanisch nicht relevanten Beschädigungen (Kratzer, Lackabplatzungen, Tuften und dergleichen) aufgrund von zeitlichen Beschränkungen und eingeschränkten Reparaturmöglichkeiten bislang mittels eines sogenannten High-Speed-Tapes (HST, selbstklebende Alu-Folie) einstweilen repariert. HST ist günstig und an vielen Flughäfen verfügbar.

Es ist die Aufgabe der Erfindung, Schnellreparaturen von lokalen und strukturmechanisch nicht relevanten Beschädigungen zu verbessern, sodass insbesondere nicht nur Operabilität sondern auch Funktionalität hergestellt werden können.

Die Aufgabe wird durch den Gegenstand der unabhängigen Ansprüche gelöst. Bevorzugte Weiterbildungen sind Gegenstand der abhängigen Ansprüche.

Die Erfindung schafft ein Schnellreparaturpatch, der zum Ausbessern einer lokalen und strukturmechanisch nicht relevanten Beschädigung eines Bauteils, vorzugsweise eines Luftfahrzeugbauteils, das eine Deckschicht und einen darunter befindlichen Blitzschlagoberflächenschutz enthält, wobei das Schnellreparaturpatch eine Schichtstruktur aufweist und die Schichtstruktur umfasst:
- eine Kunststofffolienschicht, die mit der Deckschicht stoffschlüssig verbindbar ist und die, wenn das Schnellreparaturpatch an dem Bauteil befestigt ist, von der Beschädigung abgewandt ist;
- eine elektrisch leitfähige Blitzschutzschicht, die für eine Blitzschutzfunktion oder eine elektromagnetische Interferenzschutzfunktion angepasst ist, die auf der Kunststofffolienschicht angeordnet ist und die, wenn das Schnellreparaturpatch an dem Bauteil befestigt ist, den Blitzschlagoberflächenschutz elektrisch leitend kontaktiert;
- eine Befestigungsschicht, die zum stoffschlüssigen Befestigen des Schnellreparaturpatches an dem Bauteil angepasst ist und die zumindest auf der Kunststofffolienschicht auf derselben Seite wie die elektrisch leitfähige Blitzschutzschicht angeordnet ist.

Es ist bevorzugt, dass die Kunststofffolienschicht Verstärkungsfasern enthält. Es ist bevorzugt, dass die Kunststofffolienschicht, ein radarstrahlungabschwächendes, vorzugsweise ein radarstrahlungabsorbierendes, Material enthält. Es ist bevorzugt, dass die Kunststofffolienschicht ein elektrisch leitfähiges Material enthält. Es ist bevorzugt, dass die Kunststofffolienschicht ein Material enthält, das UV-Licht oder ionisierende Strahlung abschwächt, vorzugsweise absorbiert.

Es ist bevorzugt, dass die Kunststofffolienschicht von der Blitzschutzschicht elektrisch isoliert ist.

Es ist bevorzugt, dass die Kunststofffolienschicht flächenmäßig größer als die Blitzschutzschicht ausgebildet ist, wobei die Kunststofffolienschicht einen Randbereich aufweist, der zwischen der Außenkontur der Kunststofffolienschicht und der Außenkontur der Blitzschutzschicht angeordnet ist.

Es ist bevorzugt, dass die Befestigungsschicht auf dem Randbereich aufgebracht oder an dem Randbereich angeordnet ist.

Es ist bevorzugt, dass die Schichtstruktur eine Funktionsschicht aufweist. Es ist bevorzugt, dass die Funktionsschicht auf der der Blitzschutzschicht abgewandten Seite der Kunststofffolienschicht angeordnet ist. Es ist bevorzugt, dass die Funktionsschicht eine Verstärkungsfunktion, eine Tarnfunktion, eine statische Entladungsschutzfunktion und/oder eine Schutzfunktion gegen Strahlung, insbesondere gegen UV-Strahlung und/oder ionisierende Strahlung hat.

Es ist bevorzugt, dass die Schichtstruktur eine Verstärkungsschicht umfasst, die Verstärkungsfasern enthält und die auf der Kunststofffolienschicht angeordnet ist. Es ist bevorzugt, dass die Schichtstruktur eine Tarnschicht umfasst, die ein radarstrahlungabschwächendes, vorzugsweise ein radarstrahlungabsorbierendes, Material enthält. Es ist bevorzugt, dass die Schichtstruktur eine elektrostatische Entladungsschutzschicht umfasst, die ein elektrisch leitfähiges Material enthält. Die Schichtstruktur weist eine Verstärkungsschicht auf, die zwischen der Kunststofffolienschicht und der Blitzschutzschicht angeordnet ist und diese stoffschlüssig miteinander verbindet. Es ist bevorzugte, dass die Schichtstruktur eine Strahlenschutzschicht aufweist, die ein Material enthält, das UV-Licht oder ionisierende Strahlung abschwächt, vorzugsweise absorbiert.

Es ist bevorzugt, dass die Verstärkungsschicht, die Tarnschicht, die Entladungsschutzschicht und/oder die Strahlungsschutzschicht in einer gemeinsamen Funktionsschicht zusammengefasst sind. Es ist bevorzugt, dass die Verstärkungsschicht, die Tarnschicht, die Entladungsschutzschicht, die Strahlungsschutzschicht und/oder die Funktionsschicht auf der der Blitzschutzschicht abgewandten Seite der Kunststofffolienschicht angeordnet sind.

Es ist bevorzugt, dass die Schichtstruktur in Reihenfolge Kunststofffolienschicht, Blitzschutzschicht, Befestigungsschicht ausgebildet ist. Es ist bevorzugt, dass die Schichtstruktur in Reihenfolge Kunststofffolienschicht, Verbindungsschicht, Blitzschutzschicht, Befestigungsschicht ausgebildet ist.

Es ist bevorzugt, dass die Schichtstruktur in Reihenfolge Verstärkungsschicht oder Tarnschicht oder Entladungsschutzschicht oder Strahlungsschutzschicht, Kunststofffolienschicht, Blitzschutzschicht, Befestigungsschicht ausgebildet ist. Es ist bevorzugt, dass die Schichtstruktur in Reihenfolge Verstärkungsschicht oder Tarnschicht oder Entladungsschutzschicht oder Strahlungsschutzschicht, Kunststofffolienschicht, Verbindungsschicht, Blitzschutzschicht, Befestigungsschicht ausgebildet ist.

Es ist bevorzugt, dass die Schichtstruktur in Reihenfolge Funktionsschicht, Kunststofffolienschicht, Blitzschutzschicht, Befestigungsschicht ausgebildet ist. Es ist bevorzugt, dass die Schichtstruktur in Reihenfolge Funktionsschicht, Kunststofffolienschicht, Verbindungsschicht, Blitzschutzschicht, Befestigungsschicht ausgebildet ist.

Es ist bevorzugt, dass die Schichtstruktur lediglich aus den genannten Schichten besteht.

Vorzugsweise umfasst das Schnellreparaturpatch ein Informationsmittel, vorzugsweise einen QR-Code und/oder ein RFID-Tag, durch das Angaben zur mittels des Schnellreparaturpatches durchgeführten Schnellreparatur speicherbar oder abrufbar sind. Es ist bevorzugt, dass die Angaben in dem RFID-Tag gespeichert sind oder aus diesem abrufbar sind. Es ist bevorzugt, dass die Angaben mittels eines Computers unter Verwendung des QR-Codes speicherbar oder abrufbar sind.

Es ist bevorzugt, dass das Informationsmittel in der Kunststofffolienschicht enthalten oder an dieser angebracht ist.

Die Erfindung schafft ein Schnellreparaturpatch, der zum Ausbessern einer lokalen und strukturmechanisch nicht relevanten Beschädigung eines Bauteils, vorzugsweise eines Luftfahrzeugbauteils, das eine Deckschicht und einen darunter befindlichen Blitzschlagoberflächenschutz enthält, wobei das Schnellreparaturpatch eine Schichtstruktur aufweist und die Schichtstruktur besteht aus:
- einer Kunststofffolienschicht, die mit der Deckschicht stoffschlüssig verbindbar ist und die, wenn das Schnellreparaturpatch an dem Bauteil befestigt ist, von der Beschädigung abgewandt ist;
- einer elektrisch leitfähige Blitzschutzschicht, die für eine Blitzschutzfunktion oder eine elektromagnetische Interferenzschutzfunktion angepasst ist, die auf der Kunststofffolienschicht angeordnet ist und die, wenn das Schnellreparaturpatch an dem Bauteil befestigt ist, den Blitzschlagoberflächenschutz elektrisch leitend kontaktiert;
- einer Befestigungsschicht, die zum stoffschlüssigen Befestigen des Schnellreparaturpatches an dem Bauteil angepasst ist und die zumindest auf der Kunststofffolienschicht auf derselben Seite wie die elektrisch leitfähige Blitzschutzschicht angeordnet ist;
- optional einer Verbindungsschicht, die zwischen der Kunststofffolienschicht und der Blitzschutzschicht angeordnet ist und diese miteinander stoffschlüssig verbindet;
- optional einer Funktionsschicht, die auf der der Blitzschutzschicht abgewandten Seite der Kunststofffolienschicht angeordnet ist.

Es ist bevorzugt, dass die Funktionsschicht aus einer Verstärkungsschicht, die Verstärkungsfasern enthält; und/oder einer Tarnschicht, die ein radarstrahlungabschwächendes, vorzugsweise ein radarstrahlungabsorbierendes, Material enthält; und/oder einer elektrostatischen Entladungsschutzschicht besteht, die ein elektrisch leitfähiges Material enthält.

Es ist bevorzugt, dass die Kunststofffolienschicht Verstärkungsfasern enthält. Es ist bevorzugt, dass die Kunststofffolienschicht, ein radarstrahlungabschwächendes, vorzugsweise ein radarstrahlungabsorbierendes, Material enthält. Es ist bevorzugt, dass die Kunststofffolienschicht ein elektrisch leitfähiges Material enthält.

Es ist bevorzugt, dass die Kunststofffolienschicht von der Blitzschutzschicht elektrisch isoliert ist.

Die Erfindung schafft eine Reparaturanordnung, die ein Bauteil, vorzugsweise ein Luftfahrzeugbauteil, und ein zuvor beschriebenes Schnellreparaturpatch umfasst, wobei das Bauteil eine Deckschicht und einen darunter befindlichen Blitzschlagoberflächenschutz aufweist sowie eine lokale und strukturmechanisch nicht relevante Beschädigung, wobei das Schnellreparaturpatch die Beschädigung abdeckt und mittels der Befestigungsschicht mit dem Bauteil stoffschlüssig verbunden ist, wobei die Kunststofffolienschicht mit der Deckschicht stoffschlüssig verbunden und von der Beschädigung abgewandt ist, wobei die elektrisch leitfähige Blitzschutzschicht zwischen der Kunststofffolienschicht und dem Blitzschlagoberflächenschutz angeordnet ist.

Es ist bevorzugt, dass die Blitzschutzschicht mit dem Blitzschlagoberflächenschutz elektrisch leitend verbunden ist.

Die Erfindung schafft ein Luftfahrzeug umfassend ein zuvor beschriebenes Schnellreparaturpatch und/oder eine zuvor beschriebene Reparaturanordnung, wobei vorzugsweise das Bauteil unter Auftriebshilfen, Klappen, Vorflügeln, Steuerflächen, Höhenrudern, Seitenrudern, Querrudern, Rumpfteilen, Rotorblättern, Tragflächen, Triebwerksgondeln, Höhenleitwerken und/oder Seitenleitwerken ausgewählt ist.

Die Erfindung schafft ein Schnellreparaturverfahren zum Ausbessern einer lokalen und strukturmechanisch nicht relevanten Beschädigung eines Bauteils, vorzugsweise eines Luftfahrzeugbauteils, das eine Deckschicht und einen darunter befindlichen Blitzschlagoberflächenschutz enthält, wobei das Verfahren umfasst:
1 Herstellen einer Verbindungsfläche auf dem Bauteil für ein Schnellreparaturpatch und gegebenenfalls Freilegen des Blitzschlagoberflächenschutzes;
2 Positionieren eines zuvor beschriebenen Schnellreparaturpatches an der Beschädigung; und
3 Befestigen des Schnellreparaturpatches an den in Schritt 1 hergestellten Verbindungsflächen durch Andrücken, wodurch die Kunststofffolienschicht mit der Deckschicht stoffschlüssig verbunden wird.

Es ist bevorzugt, dass in Schritt 1 das Herstellen der Verbindungsflächen und/oder das Freilegen des Blitzschlagoberflächenschutzes z.B. durch Schleifen erfolgt.

Es ist bevorzugt, dass in Schritt 1 das Herstellen ein Reinigen, ein Trocknen und/oder ein Fettentfernen eines Oberflächenbereichs des Bauteils enthält, um die Verbindungsfläche zu schaffen.

Es ist bevorzugt, dass in Schritt 2 das Schnellreparaturpatch derart positioniert wird, dass die Blitzschutzschicht den Blitzschlagoberflächenschutz kontaktieren kann.

Es ist bevorzugt, dass in Schritt 3 die Blitzschutzschicht mit dem Blitzschlagoberflächenschutz elektrisch leitend kontaktiert wird.

Die Erfindung schafft die Verwendung eines zuvor beschriebenen Schnellreparaturpatches zur Reparatur einer lokalen und strukturmechanisch nicht relevanten Beschädigung eines Luftfahrzeugbauteils.

Mit der hierin beschriebenen Idee kann die typische Lebensdauer von etwa 2 Monaten von Schnellreparaturen gesteigert werden. Somit kann die Zeit bis zu einer vollständigen Reparatur entsprechend dem Reparaturhandbuch verlängert werden. Durch eine entsprechende Anpassung der Kunststofffolie kann das Patch an die zu reparierende Stelle angepasst werden, sodass insgesamt die Schnellreparatur weniger sichtbar ist.

Militärisch genutzte Luftfahrzeuge haben meist eine die Radarsignatur verringernde Beschichtung. Mittels des Schnellreparaturpatches können sogenannte Hotspots vermieden werden, welche die Radarsignatur beeinträchtigen.

Das hier vorgestellte smarte Schnellreparaturpatch (engl.: smart quick surface repair patch, SQSR patch) ist ein mehrschichtiges Patch vordefinierter Größe und weist in der Regel drei bis vier Schichten auf.

Schicht 1 ist eine Kunststofffolienschicht. Diese kann eingefärbt sein. Die Kunststofffolienschicht ist beispielsweise eine Polyurethan-Folie. Die Kunststofffolie kann eine Markierung als Informationsmittel enthalten, beispielsweise in Form eines QR-Codes oder eines RFID-Tags. Darin können verschiedene Angaben zum Patch und zur Schnellreparatur gespeichert werden (beispielsweise Art, Herstellungsdatum, Einbaudatum und individuelle Nummer). Optional kann die Kunststofffolienschicht eine Verstärkung aus Verstärkungsfasern (beispielsweise Glasfasern, Kevlar) enthalten. Diese sind besonders zum Reparieren von Treibstofftanks oder Kampfschäden geeignet. Optional kann die Kunststofffolie auch mit tarnungsverbessernden Eigenschaften versehen werden (beispielsweise durch geeignete radarstrahlenabsorbierende oder -abschwächende Stoffe). Auch eine farblose Deckschicht kann aufgebracht werden.

Schicht 2 enthält elektrisch leitfähiges Material. Als elektrisch leitfähiges Material können beispielsweise Metallstreckfolie, perforierte Metallfolie, Streckmetallgitter, Graphen oder dergleichen verwendet werden. Diese Schicht dient als Blitzschlagoberflächenschutz (engl.: lightning strike surface protection, LSSP) oder Abschirmung gegen elektromagnetische Interferenz (engl.: EMI shielding). Je nach Material kann eine zusätzliche Klebeschicht als Verbindungsschicht zwischen Schicht 1 und Schicht 2 vorgesehen sein.

Schicht 3 ist eine Befestigungsschicht beispielsweise aus Klebstofffilm. Diese kann lediglich auf Schicht 1 aufgebracht sein. Diese Schicht kann zusätzlich auch auf Schicht 2 angeordnet sein, wobei dafür leitfähiger Klebstoff bevorzugt verwendet wird.

Ferner kann auf Schicht 1 eine als Schicht 1⁺ bezeichnete Schicht angeordnet sein. Diese Schicht kann optional als Verstärkungsschicht mit den Verstärkungsfasern, als Tarnschicht mit den tarnverbessernden Materialien oder als elektrostatischer Entladungsschutz gestaltet sein. Die Schicht kann auch als Funktionsschicht bezeichnet werden.

Die Reihenfolge der Schichten kann an die entsprechende Anwendung angepasst werden. Ebenso kann die Formgebung des Patches an unterschiedliche Situationen angepasst werden. So kann der Patch quadratisch, rechteckig, kreisrund oder elliptisch ausgebildet sein. Das Gleiche gilt für die Form von Schicht 2. Die Form der Schicht 2 kann von der Gesamtform abweichen.

Vorteilhaft kann das Schnellreparaturpatch mittels einer zu dem HST ähnlichen Methode angebracht werden. Durch die Gestaltung des Patches kann ein Abschälen besser vermieden werden. Im Unterschied zu HST ist der Patch auch wasserdicht und erhöht somit die Korrosionsbeständigkeit. Selbst beschädigte Logos oder Markierungen am Flugzeug können mit geringem Aufwand repariert werden.

Der Patch erlaubt es im Vergleich zu HST, dass die Wartung kleinerer Beschädigungen bis zum regulären D-Check aufgeschoben werden können. Für einzelne Fälle kann der Patch sogar als dauerhafte Reparatur zulässig sein.

Entsprechend erlauben die hier vorgestellten Ideen eine einfachere, haltbarere und sicherere Reparatur von Oberflächenschäden für den Betreiber. Das Reparaturpatch ermöglicht einen langanhaltenden Schutz, der mit Blitzschlag zusammenhängende Oberflächenschäden verringert, minimiert oder sogar vermeidet.

Ausführungsbeispiele werden anhand der beigefügten schematischen Zeichnungen näher erläutert. Darin zeigt:
- Fig. 1: ein Ausführungsbeispiel eines Luftfahrzeugs;
- Fig. 2: ein Ausführungsbeispiel eines Schnellreparaturpatches;
- Fig. 3: eine Draufsicht eines Schnellreparaturpatches;
- Fig. 4: ein Ausführungsbeispiel einer Reparaturanordnung mit einem Schnellreparaturpatch aus Fig. 2; und
- Fig. 5: ein Ausführungsbeispiel eines Patchstreifens.

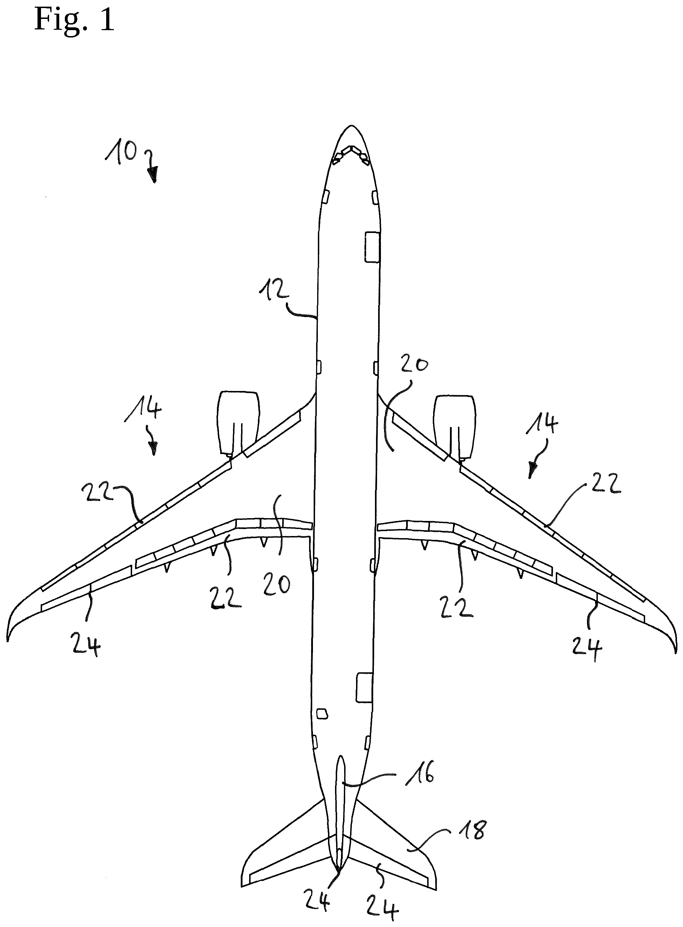

Es wird zunächst auf die Fig. 1 Bezug genommen, die ein Luftfahrzeug 10 zeigt. Das Luftfahrzeug 10 umfasst auf an sich bekannte Weise einen Rumpf 12 an dem ein Paar von Flügeln 14 angeordnet sind. An dem hinteren Ende des Rumpfes 12 sind ein Seitenleitwerk 16 und ein Höhenleitwerk 18 angeordnet. Jeder Flügel 14 umfasst Tragflächen 20 und Auftriebshilfen 22. Der Flügel 14, das Seitenleitwerk 16 und das Höhenleitwerk 18 weisen zudem Steuerflächen 24 auf.

Die zuvor genannten Bauteile 26 können eine beispielsweise durch Blitzschlag verursachte lokale und strukturmechanisch nicht relevante Beschädigung 28 aufweisen. Das Bauteil 26 umfasst einen Grundkörper 30. Der Grundkörper 30 kann aus Metall oder einem faserverstärkten Kunststoff gebildet sein. Ferner umfasst das Bauteil 26 einen Blitzschlagoberflächenschutz 32. Der Blitzschlagoberflächenschutz 32 kann auch durch den Grundkörper 30 selbst gebildet sein. Zudem umfasst das Bauteil 26 eine Deckschicht 34, die auf dem Blitzschlagoberflächenschutz 32 angeordnet ist.

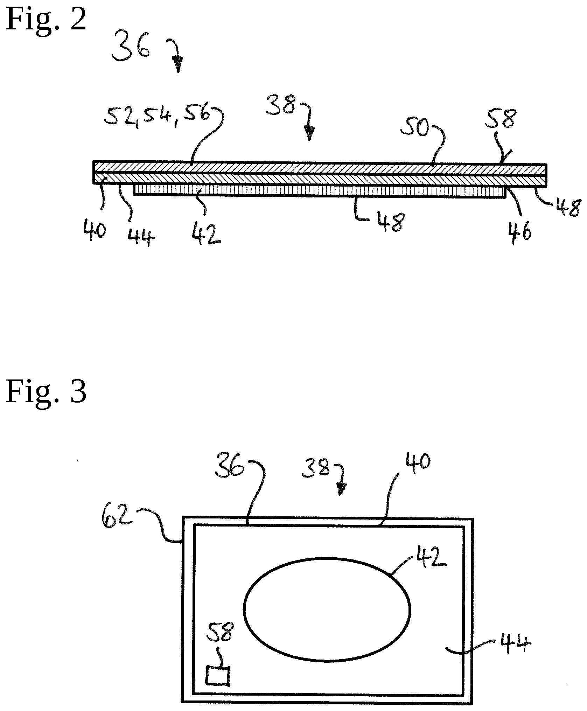

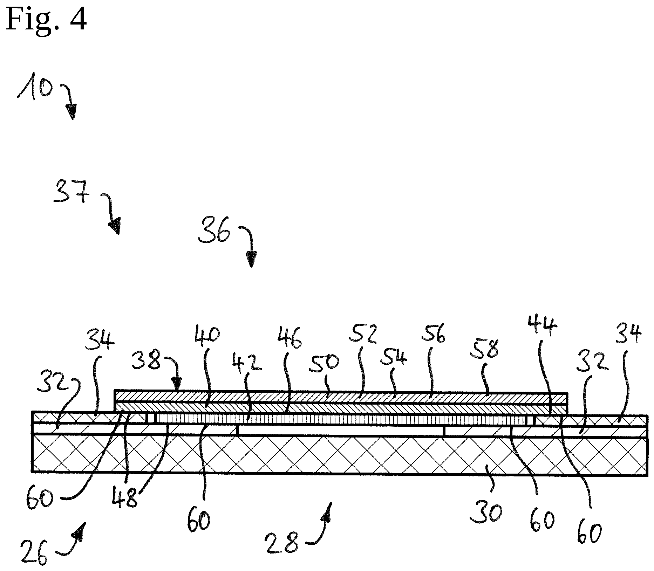

Die Fig. 2 bis Fig. 4 zeigen schematisch ein Schnellreparaturpatch 36, der zum Reparieren der Beschädigung 28 in einer Reparaturanordnung 37 (Fig. 4) verwendet werden kann. Das Schnellreparaturpatch hat eine Dicke von etwa 0,1 mm bis 0,2 mm.

Das Schnellreparaturpatch 36 umfasst eine Schichtstruktur 38. Die Schichtstruktur 38 weist eine Kunststofffolienschicht 40 auf. Die Kunststofffolienschicht 40 ist vorzugsweise aus einer Polyurethan-Folie gebildet. Die Kunststofffolienschicht 40 kann eingefärbt sein. Die Kunststofffolienschicht 40 ist vorliegend rechteckförmig ausgebildet. Die Kunststofffolienschicht 40 kann jedoch auch andere Formen, beispielsweise Kreisform, Ellipsenform oder Quadratform haben.

Die Schichtstruktur 38 umfasst eine an einer Fläche der Kunststofffolienschicht 40 angeordnete elektrisch leitfähige Blitzschutzschicht 42. Die Blitzschutzschicht 42 enthält ein elektrisch leitfähiges Material aus Metall oder Graphen. Die Blitzschutzschicht 42 kann dementsprechend Streckmetall, perforierte Metallfolie und der gleichen enthalten. Die Blitzschutzschicht 42 hat vorliegend Ellipsenform. Die Blitzschutzschicht 42 kann jedoch auch andere Formen, beispielsweise Kreisform, Rechteckform oder Quadratform haben. Die Blitzschutzschicht 42 weist ein flächenmäßig geringeres Ausmaß auf als die Kunststofffolienschicht 40. In Draufsicht betrachtet (Fig. 3) hat die Kunststofffolienschicht 40 einen Randbereich 44 der zwischen der Kontur der Kunststofffolienschicht 40 und der Blitzschutzschicht 42 angeordnet ist.

Zwischen der Kunststofffolienschicht 40 und der Blitzschutzschicht 42 ist in Dickenrichtung eine dünne Verbindungsschicht 46 angeordnet, die die beiden Schichten stoffschlüssig miteinander verbindet.

Die Schichtstruktur 38 umfasst weiter eine an der Kunststofffolienschicht 40 angeordnete Befestigungsschicht 48. Die Befestigungsschicht 48 enthält einen Klebstoff, um das Schnellreparaturpatch 36 mit dem Bauteil 26 stoffschlüssig zu verbinden. In einer Variante kann die Befestigungsschicht 48 mit dem Bauteil 26 durch Schweißen stoffschlüssig verbunden werden. Die Befestigungsschicht 48 ist lediglich auf dem Randbereich 44 aufgebracht oder an diesem angeordnet. Die Befestigungsschicht 48 kann zusätzlich auch auf der Blitzschutzschicht 42 aufgebracht sein. Im Bereich der Blitzschutzsicht 42 ist der Klebstoff vorzugsweise leitfähig ausgebildet. Alternativ ist ein Bereich der Blitzschutzschicht 42 freigelassen, um einen elektrischen Kontakt zwischen Blitzschutzschicht 42 und Blitzschlagoberflächenschutz 32 zu ermöglichen.

Die Schichtstruktur 38 kann zudem eine Funktionsschicht 50 aufweisen. Die Funktionsschicht 50 ist auf der der Blitzschutzschicht 42 abgewandten Fläche der Kunststofffolienschicht 40 angeordnet.

Die Funktionsschicht 50 kann eine Verstärkungsschicht 52 aufweisen, die Verstärkungsfasern enthält. Als Verstärkungsfasern werden Glasfasern oder Kevlar verwendet.

Die Funktionsschicht 50 kann eine Tarnschicht 54 aufweisen, die einen radarabsorbierenden oder -abschwächenden Zusatz oder Zusätze enthält.

Die Funktionsschicht 50 kann eine elektrostatische Entladungsschutzschicht 56 enthalten, die leitfähiges Material enthält.

Die Funktionsschicht 50 ist vorzugsweise als eine einzelne Schicht ausgebildet, in der die Verstärkungsschicht 52, die Tarnschicht 54 und die Entladungsschutzschicht 56 integriert sind.

Alternativ können die Funktionen der Verstärkungsschicht 52, der Tarnschicht 54 oder der Entladungsschutzschicht 56 in einer beliebigen Kombination in der Kunststofffolienschicht verwirklicht sein.

Das Schnellreparaturpatch 36 kann ferner Informationsmittel 58 aufweisen, mittels der Angaben zu dem Schnellreparaturpatch 36 und/oder der damit durchgeführten Schnellreparatur speicherbar oder abrufbar sind. Zu den Angaben gehören die Art und das Herstellungsdatum des Schnellreparaturpatches 36, das Reparaturdatum, der Reparaturort und jegliche weitere Information, insbesondere technischer Art, die für das Schnellreparaturpatch 36 bzw. die Reparatur als solches relevant sind. Informationsmittel 58 können beispielsweise ein QR-Code oder ein RFID-Tag sein. Der QR-Code und das RFID-Tag können jeweils als Referenz für die entsprechenden Angaben dienen, die in einem Computersystem oder -netzwerk gespeichert sind. Das RFID-Tag kann auch so ausgebildet sein, dass es die Angaben direkt enthält.

Eine Schnellreparatur wird nachfolgend mit Bezug auf Fig. 4 näher erläutert. Die Beschädigung 28 wird zunächst z.B. durch Schleifen bearbeitet um eine glatte, saubere, trockene und fettfreie Verbindungsfläche 60 für das Schnellreparaturpatch 36 zu schaffen.

Sodann wird ein passendes Schnellreparaturpatch 36 ausgewählt und über der Beschädigung 28 derart platziert, dass diese vollständig überdeckt ist. Anschließend wird das Schnellreparaturpatch 36 an das Bauteil 26 angedrückt. Dabei wird die Kunststofffolienschicht 40, insbesondere der Randbereich 44, gegen die Deckschicht 34 gedrückt und mit dieser durch die Befestigungsschicht 48 stoffschlüssig verbunden. Ferner wird die Blitzschutzschicht 42 gegen den Blitzschlagoberflächenschutz 32 gedrückt, sodass ein elektrischer Kontakt entsteht. Falls auch die Blitzschutzschicht 42 mit Klebstoff beschichtet ist, wird auch die Blitzschutzschicht 42 mit dem Blitzschlagoberflächenschutz 32 stoffschlüssig verbunden.

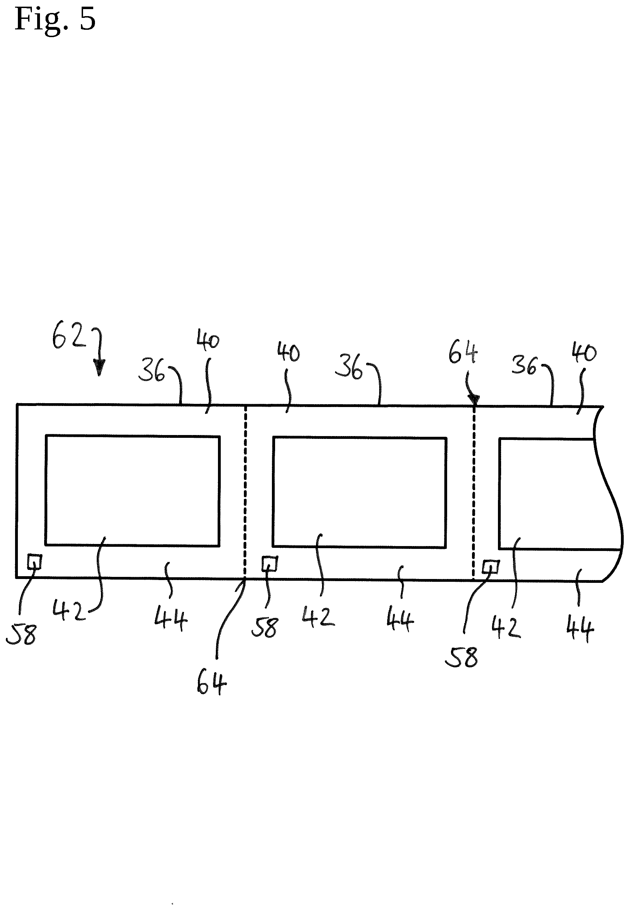

Es wird nachfolgend auf Fig. 5 Bezug genommen, die eine Darreichungsform von Schnellreparaturpatches 36 als Patchstreifen 62 zeigt. Eine Mehrzahl von Schnellreparaturpatches 36 sind dabei an einem trennbaren Kantenbereich 64, beispielsweise mittels Perforierung, miteinander verbunden. Der Patchstreifen 62 kann in eine Rolle aufgewickelt sein. Das gewünschte Schnellreparaturpatch 36 wird vor der Verwendung von dem Patchstreifen 62 abgetrennt.

Um Schnellreparaturen von lokalen und strukturmechanisch nicht relevanten Beschädigungen (28) bei Luftfahrzeugbauteilen (26) zu verbessern, wird ein Schnellreparaturpatch (36) vorgeschlagen. Das Schnellreparaturpatch (36) hat eine Schichtstruktur (38) mit einer Kunststofffolie (40), auf der ein Blitzschutz (42) aufgebracht ist, sowie einer Klebstoffschicht (48), die zumindest auf der Kunststofffolie (40) angeordnet ist. Das Schnellreparaturpatch (36) kann auf die Beschädigung (28) aufgeklebt werden, sodass der Blitzschutz (42) in elektrischem Kontakt mit dem Blitzschutz des Bauteils (26) ist. Das Schnellreparaturpatch (36) kann einen QR-Code oder ein RFID-Tag aufweisen, über die Angaben zu dem Schnellreparaturpatch (36) oder zu der Schnellreparatur (36) gespeichert oder abgerufen werden können.

### Bezugszeichenliste:

- 10: Luftfahrzeug
- 12: Rumpf
- 14: Flügel
- 16: Seitenleitwerk
- 18: Höhenleitwerk
- 20: Tragfläche
- 22: Auftriebshilfe
- 24: Steuerfläche
- 26: Bauteil
- 28: Beschädigung
- 30: Grundkörper
- 32: Blitzschlagoberflächenschutz
- 34: Deckschicht
- 36: Schnellreparaturpatch
- 37: Reparaturanordnung
- 38: Schichtstruktur
- 40: Kunststofffolienschicht
- 42: Blitzschutzschicht
- 44: Randbereich
- 46: Verbindungsschicht
- 48: Befestigungsschicht
- 50: Funktionsschicht
- 52: Verstärkungsschicht
- 54: Tarnschicht
- 56: Entladungsschutzschicht
- 58: Informationsmittel
- 60: Verbindungsfläche
- 62: Patchstreifen
- 64: Kantenbereich

## Patentansprüche

1. Schnellreparaturpatch (36), das zum Ausbessern einer lokalen und strukturmechanisch nicht relevanten Beschädigung (28) eines Bauteils (26), vorzugsweise eines Luftfahrzeugbauteils (12, 14, 16, 18, 20, 22, 24), das eine Deckschicht (34) und einen darunter befindlichen Blitzschlagoberflächenschutz (32) enthält, wobei das Schnellreparaturpatch (36) eine Schichtstruktur (38) aufweist und die Schichtstruktur (38) umfasst:
- eine Kunststofffolienschicht (40), die mit der Deckschicht (34) stoffschlüssig verbindbar ist und die, wenn das Schnellreparaturpatch (36) an dem Bauteil befestigt ist, von der Beschädigung (28) abgewandt ist;
- eine elektrisch leitfähige Blitzschutzschicht (42), die für eine Blitzschutzfunktion oder eine elektromagnetische Interferenzschutzfunktion angepasst ist, die auf der Kunststofffolienschicht (40) angeordnet ist und die, wenn das Schnellreparaturpatch (36) an dem Bauteil (26) befestigt ist, den Blitzschlagoberflächenschutz (32) elektrisch leitend kontaktiert; wobei die Blitzschutzschicht (42) flächenmäßig ein geringeres Ausmaß als die Kunststofffolienschicht (40) aufweist und die Kunststofffolienschicht (40) einen Randbereich (44) hat, der zwischen der Kontur der Kunststofffolienschicht (40) und der Blitzschutzschicht (42) angeordnet ist;
- eine Verbindungsschicht (46) zwischen der Kunststoffschicht (40) und der Blitzschutzschicht (42), die die beiden Schichten (40, 42) stoffschlüssig miteinander verbindet; und
- eine Befestigungsschicht (48), die zum stoffschlüssigen Befestigen des Schnellreparaturpatches (36) an dem Bauteil angepasst ist und die lediglich auf dem Randbereich (44) der Kunststofffolienschicht (40) auf derselben Seite wie die elektrisch leitfähige Blitzschutzschicht (42) angeordnet ist.

2. Schnellreparaturpatch (36) nach Anspruch 1, **dadurch gekennzeichnet, dass** die Kunststofffolienschicht (40) Verstärkungsfasern, ein radarstrahlungabschwächendes, vorzugsweise ein radarstrahlungabsorbierendes, Material, und/oder ein elektrisch leitfähiges Material enthält, wobei die Kunststofffolienschicht (40) von der Blitzschutzschicht (42) elektrisch isoliert ist, und/oder wobei die Kunststofffolienschicht (40) ein Material enthält, das UV-Licht oder ionisierende Strahlung abschwächt, vorzugsweise absorbiert.

3. Schnellreparaturpatch (36) nach einem der vorhergehenden Ansprüche, **dadurch gekennzeichnet, dass** die Schichtstruktur (38)
- eine Verstärkungsschicht (52), die Verstärkungsfasern enthält und die auf der Kunststofffolienschicht (40) angeordnet ist; und/oder
- eine Tarnschicht (54), die ein radarstrahlungabschwächendes, vorzugsweise ein radarstrahlungabsorbierendes, Material enthält; und/oder
- eine elektrostatische Entladungsschutzschicht (56), die ein elektrisch leitfähiges Material enthält;
- eine Strahlenschutzschicht, die ein Material enthält, das UV-Licht oder ionisierende Strahlung abschwächt, vorzugsweise absorbiert; und
- die Verbindungsschicht (46) aufweist.

4. Schnellreparaturpatch (36) nach Anspruch 3, **dadurch gekennzeichnet, dass** die Verstärkungsschicht (52), die Tarnschicht (54), die Entladungsschutzschicht (56) und/oder die Strahlungsschutzschicht in einer gemeinsamen Funktionsschicht (50) zusammengefasst sind; und/oder dass die Verstärkungsschicht (52), die Tarnschicht (54), die Entladungsschutzschicht (56), die Strahlungsschutzschicht und/oder die Funktionsschicht (50) auf der der Blitzschutzschicht (42) abgewandten Seite der Kunststofffolienschicht (40) angeordnet sind.

5. Schnellreparaturpatch (36) nach einem der vorhergehenden Ansprüche, **dadurch gekennzeichnet, dass** die Schichtstruktur (38) einer der folgenden Reihenfolgen ausgebildet ist:
- Kunststofffolienschicht (40), Blitzschutzschicht (42), Befestigungsschicht (48); oder
- Kunststofffolienschicht (40), Verbindungsschicht (46), Blitzschutzschicht (42), Befestigungsschicht (48); oder
- Verstärkungsschicht (52) oder Tarnschicht (54) oder Entladungsschutzschicht (56) oder Strahlungsschutzschicht, Kunststofffolienschicht (40), Blitzschutzschicht (42), Befestigungsschicht (48); oder
- Verstärkungsschicht (52) oder Tarnschicht (54) oder Entladungsschutzschicht (56) oder Strahlungsschutzschicht, Kunststofffolienschicht (40), Verbindungsschicht (46), Blitzschutzschicht (42), Befestigungsschicht (48); oder
- Funktionsschicht (50), Kunststofffolienschicht (40), Blitzschutzschicht (42), Befestigungsschicht (48); oder
- Funktionsschicht (50), Kunststofffolienschicht (40), Verbindungsschicht (46), Blitzschutzschicht (42), Befestigungsschicht (48).

6. Schnellreparaturpatch (36) nach einem der vorhergehenden Ansprüche, **dadurch gekennzeichnet, dass** die Schichtstruktur (38) lediglich aus den genannten Schichten besteht.

7. Schnellreparaturpatch (36) nach einem der vorhergehenden Ansprüche, **dadurch gekennzeichnet, dass** das Schnellreparaturpatch (36) Informationsmittel (58) umfasst, vorzugsweise einen QR-Code und/oder ein RFID-Tag, durch die Angaben zu dem Schnellreparaturpatch (36) und/oder zur mittels des Schnellreparaturpatches (36) durchgeführten Schnellreparatur speicherbar oder abrufbar sind.

8. Patchstreifen (62) umfassend eine Mehrzahl von Schnellreparaturpatches (36) nach einem der vorhergehenden Ansprüche, wobei die Schnellreparaturpatches (36) in voneinander einzeln trennbarer Weise miteinander an einem Kantenbereich (64) verbunden sind.

9. Patchstreifen (62) nach Anspruch 8, **dadurch gekennzeichnet, dass** der Kantenbereich (64) zum Trennen perforiert ausgebildet ist.

10. Patchstreifen (62) nach Anspruch 8 oder 9, **dadurch gekennzeichnet, dass** der Patchstreifen (62) in Form einer Rolle ausgebildet ist.

11. Reparaturanordnung (37), die ein Bauteil (26), vorzugsweise ein Luftfahrzeugbauteil (12, 14, 16, 18, 20, 22, 24), und ein Schnellreparaturpatch (36) nach einem der Ansprüche 1 bis 6 umfasst, wobei das Bauteil (26) eine Deckschicht (34) und einen darunter befindlichen Blitzschlagoberflächenschutz (32) aufweist sowie eine lokale und strukturmechanisch nicht relevante Beschädigung (28), wobei das Schnellreparaturpatch (36) die Beschädigung (28) abdeckt und mittels der Befestigungsschicht (48) mit dem Bauteil (26) stoffschlüssig verbunden ist, wobei die Kunststofffolienschicht (40) mit der Deckschicht (34) stoffschlüssig verbunden und von der Beschädigung (28) abgewandt ist, wobei die elektrisch leitfähige Blitzschutzschicht (42) zwischen der Kunststofffolienschicht (40) und dem Blitzschlagoberflächenschutz (32) angeordnet ist.

12. Luftfahrzeug (10) umfassend ein Schnellreparaturpatch (36) und/oder eine Reparaturanordnung (37) nach einem der vorhergehenden Ansprüche, wobei vorzugsweise das Bauteil (26) unter Auftriebshilfen (22), Klappen, Vorflügeln, Steuerflächen (24), Höhenrudern, Seitenrudern, Querrudern, Rumpfteilen (12), Rotorblättern, Tragflächen (20), Triebwerksgondeln, Höhenleitwerken (18) und/oder Seitenleitwerken (16) ausgewählt ist.

13. Schnellreparaturverfahren zum Ausbessern einer lokalen und strukturmechanisch nicht relevanten Beschädigung (28) eines Bauteils (26), vorzugsweise eines Luftfahrzeugbauteils (12, 14, 16, 18, 20, 22, 24), das eine Deckschicht (34) und einen darunter befindlichen Blitzschlagoberflächenschutz (32) enthält, wobei das Verfahren umfasst:
13.1 Herstellen von Verbindungsflächen (60) auf dem Bauteil (26) für ein Schnellreparaturpatch (36) und gegebenenfalls Freilegen des Blitzschlagoberflächenschutzes (32);
13.2 Positionieren eines Schnellreparaturpatches (36) nach einem der vorhergehenden Ansprüche an der Beschädigung (28);
13.3 Aufbringen einer Befestigungsschicht (48) lediglich auf einen Randbereich (44) einer Kunststofffolienschicht (40) des Schnellreparaturpatches (36); und
13.4 Befestigen des Schnellreparaturpatches (36) an den in Schritt 13.1 hergestellten Verbindungsflächen (60) durch Andrücken der Kunststofffolienschicht (40) insbesondere im Randbereich (44), wodurch die Kunststofffolienschicht (40) mit der Deckschicht (34) stoffschlüssig verbunden wird und eine Blitzschutzschicht (42) des Schnellreparaturpatches (36) mit dem Blitzschlagoberflächenschutz (32) bevorzugt elektrisch leitend kontaktiert wird.

14. Schnellreparaturverfahren nach Anspruch 13, **dadurch gekennzeichnet, dass** in Schritt 13.1 das Herstellen der Verbindungsflächen (60) und/oder das Freilegen des Blitzschlagoberflächenschutzes (32) durch Schleifen erfolgt.

15. Verwendung eines Schnellreparaturpatchs (36) nach einem der Ansprüche 1 bis 6 zur Reparatur einer lokalen und strukturmechanisch nicht relevanten Beschädigung (28) eines Luftfahrzeugbauteils (12, 14, 16 ,18, 20, 22, 24).

## Claims

1. Quick repair patch (36) for repairing local damage (28) to a component (26) that is not relevant in terms of structural mechanics, preferably an aircraft component (12, 14, 16, 18, 20, 22, 24), which contains a top layer (34) and a lightning strike surface protection (32) located underneath, wherein the quick repair patch (36) has a layer structure (38) and the layer structure (38) comprises:
- A plastic film layer (40) that can be bonded to the top layer (34) and which, when the quick repair patch (36) is attached to the component, faces away from the damage (28);
- An electrically conductive lightning protection layer (42) adapted for a lightning protection function or an electromagnetic interference protection function, which is arranged on the plastic film layer (40) and which, when the quick repair patch (36) is attached to the component (26), is in electrically conductive contact with the lightning strike surface protection (32) when the quick repair patch (36) is attached to the component (26); wherein the lightning protection layer (42) has a smaller area than the plastic film layer (40) and the plastic film layer (40) has an edge area (44) which is arranged between the contour of the plastic film layer (40) and the lightning protection layer (42);
- A connecting layer (46) between the plastic layer (40) and the lightning protection layer (42), which connects the two layers (40, 42) to each other in a material-locking manner; and
- A fastening layer (48) that is adapted to fasten the quick repair patch (36) to the component in a material-locking manner and that is arranged only on the edge area (44) of the plastic film layer (40) on the same side as the electrically conductive lightning protection layer (42).

2. Quick repair patch (36) according to claim 1, **characterized in that** the plastic film layer (40) contains reinforcing fibers, a radar radiation attenuating, preferably a radar radiation absorbing, material, and/or an electrically conductive material, wherein the plastic film layer (40) is electrically insulated from the lightning protection layer (42), and/or wherein the plastic film layer (40) contains a material that attenuates, preferably absorbs, UV light or ionizing radiation.

3. Quick repair patch (36) according to one of the preceding claims, **characterized in that** the layer structure (38) comprises
- A reinforcement layer (52) containing reinforcement fibers and arranged on the plastic film layer (40); and/or
- A camouflage layer (54) containing a radar radiation attenuating, preferably radar radiation absorbing, material; and/or
- An electrostatic discharge protection layer (56) containing an electrically conductive material;
- A radiation protection layer containing a material that attenuates, preferably absorbs, UV light or ionizing radiation; and
- The connecting layer (46).

4. Quick repair patch (36) according to claim 3, **characterized in that** the reinforcement layer (52), the camouflage layer (54), the discharge protection layer (56), and/or the radiation protection layer are combined in a common functional layer (50); and/or that the reinforcement layer (52), the camouflage layer (54), the discharge protection layer (56), the radiation protection layer and/or the functional layer (50) are arranged on the side of the plastic film layer (40) facing away from the lightning protection layer (42).

5. Quick repair patch (36) according to one of the preceding claims, **characterized in that** the layer structure (38) is formed in one of the following sequences:
- Plastic film layer (40), lightning protection layer (42), fastening layer (48); or
- Plastic film layer (40), bonding layer (46), lightning protection layer (42), fastening layer (48); or
- Reinforcement layer (52) or camouflage layer (54) or discharge protection layer (56) or radiation protection layer, plastic film layer (40), lightning protection layer (42), fastening layer (48); or
- Reinforcement layer (52) or camouflage layer (54) or discharge protection layer (56) or radiation protection layer, plastic film layer (40), bonding layer (46), lightning protection layer (42), fastening layer (48); or
- Functional layer (50), plastic film layer (40), lightning protection layer (42), fastening layer (48); or
- Functional layer (50), plastic film layer (40), connecting layer (46), lightning protection layer (42), fastening layer (48).

6. Quick repair patch (36) according to one of the preceding claims, **characterized in that** the layer structure (38) comprises solely of the layers mentioned.

7. Quick repair patch (36) according to one of the preceding claims, **characterized in that** the quick repair patch (36) comprises information means (58), preferably a QR code and/or an RFID tag, by means of which information about the quick repair patch (36) and/or the quick repair carried out using the quick repair patch (36) can be stored or retrieved.

8. Patch strip (62) comprising a plurality of quick repair patches (36) according to one of the preceding claims, wherein the quick repair patches (36) are connected to each other at an edge area (64) in a manner that allows them to be separated from each other individually.

9. Patch strip (62) according to claim 8, **characterized in that** the edge area (64) is perforated for separation.

10. Patch strip (62) according to claim 8 or 9, **characterized in that** the patch strip (62) is designed in the form of a roll.

11. Repair assembly (37) comprising a component (26), preferably an aircraft component (12, 14, 16, 18, 20, 22, 24), and a quick repair patch (36) according to one of claims 1 to 6, wherein the component (26) has a top layer (34) and an underlying lightning strike surface protection (32) as well as local damage (28) that is not relevant in terms of structural mechanics, wherein the quick repair patch (36) covers the damage (28) and is bonded to the component (26) by means of the fastening layer (48), wherein the plastic film layer (40) is bonded to the cover layer (34) and faces away from the damage (28), wherein the electrically conductive lightning protection layer (42) is arranged between the plastic film layer (40) and the lightning strike surface protection (32).

12. Aircraft (10) comprising a quick repair patch (36) and/or a repair assembly (37) according to any of the preceding claims, wherein preferably the component (26) is located among lift aids (22), flaps, slats, control surfaces (24), elevators, rudders, ailerons, fuselage parts (12), rotor blades, wings (20), engine nacelles, horizontal stabilizers (18), and/or vertical stabilizers (16).

13. Quick repair method for repairing local damage (28) to a component (26), preferably an aircraft component (12, 14, 16, 18, 20, 22, 24), which includes a top coat (34) and an underlying lightning strike surface protection (32), wherein the method comprises:
13.1 Creating bonding surfaces (60) on the component (26) for a quick repair patch (36) and, if necessary, exposing the lightning strike surface protection (32);
13.2 Positioning a quick repair patch (36) according to one of the preceding claims on the damage (28);
13.3 Applying a fastening layer (48) only to an edge area (44) of a plastic film layer (40) of the quick repair patch (36); and
13.4 Fastening the quick repair patch (36) to the connecting surfaces (60) created in step 13.1 by pressing down on the plastic film layer (40), particularly in the edge area (44), whereby the plastic film layer (40) is connected to the cover layer (34) in a material-locking manner and a lightning protection layer (42) of the quick repair patch (36) is preferably electrically conductively contacted with the lightning strike surface protection (32).

14. Quick repair method according to claim 13, **characterized in that** in step 13.1, the connecting surfaces (60) are produced and/or the lightning strike surface protection (32) is exposed by grinding.

15. Use of a quick repair patch (36) according to one of claims 1 to 6 for repairing local damage (28) to an aircraft component (12, 14, 16, 18, 20, 22, 24) that is not relevant in terms of structural mechanics.

## Revendications

1. Patch de réparation rapide (36) destiné à réparer un dommage localisé et sans incidence sur la structure mécanique (28) d'un composant (26), de préférence d'un composant d'aéronef (12, 14, 16, 18, 20, 22, 24), qui comprend une couche de revêtement (34) et une protection de surface contre la foudre (32) située en dessous, le patch de réparation rapide (36) présentant une structure en couches (38) et la structure en couches (38) comprenant:
- Une couche de film plastique (40) qui peut être reliée de manière solidaire à la couche de recouvrement (34) et qui, lorsque le patch de réparation rapide (36) est fixé à l'élément, est détournée de l'endommagement (28);
- Une couche de protection contre la foudre électriquement conductrice (42) qui est adaptée à une fonction de protection contre la foudre ou à une fonction de protection contre les interférences électromagnétiques, qui est disposée sur la couche de film plastique (40) et qui, lorsque le patch de réparation rapide (36) est fixé sur le composant (26), est en contact électriquement conducteur avec la surface de protection contre la foudre (32) de manière électriquement conductrice ; la couche de protection contre la foudre (42) ayant une surface inférieure à celle de la couche de film plastique (40) et la couche de film plastique (40) ayant une zone de bordure (44) disposée entre le contour de la couche de film plastique (40) et la couche de protection contre la foudre (42);
- Une couche de liaison (46) entre la couche de plastique (40) et la couche de protection contre la foudre (42), qui relie les deux couches (40, 42) entre elles par adhérence; et
- Une couche de fixation (48) qui est adaptée pour fixer solidement le patch de réparation rapide (36) sur le composant et qui est disposée uniquement sur la zone périphérique (44) de la couche de film plastique (40) du même côté que la couche de protection contre la foudre électriquement conductrice (42).

2. Patch de réparation rapide (36) selon la revendication 1, **caractérisé en ce que** la couche de film plastique (40) contient des fibres de renfort, un matériau atténuant le rayonnement radar, de préférence un matériau absorbant le rayonnement radar, et/ou un matériau électriquement conducteur, la couche de film plastique (40) étant isolée électriquement de la couche de protection contre la foudre (42), et/ou la couche de film plastique (40) contenant un matériau qui atténue, de préférence absorbe, la lumière UV ou le rayonnement ionisant.

3. Patch de réparation rapide (36) selon l'une des revendications précédentes, **caractérisé en ce que** la structure en couches (38)
- Comprend une couche de renfort (52) qui contient des fibres de renfort et qui est disposée sur la couche de film plastique (40) ; et/ou
- Une couche de camouflage (54) contenant un matériau atténuant les ondes radar, de préférence absorbant les ondes radar ; et/ou
- Une couche de protection contre les décharges électrostatiques (56) contenant un matériau électriquement conducteur ;
- Une couche de protection contre les rayonnements, qui contient un matériau qui atténue, de préférence absorbe, les rayons UV ou les rayonnements ionisants ; et
- La couche de liaison (46).

4. Patch de réparation rapide (36) selon la revendication 3, **caractérisé en ce que** la couche de renfort (52), la couche de camouflage (54), la couche de protection contre les décharges (56) et/ou la couche de protection contre les rayonnements sont regroupées dans une couche fonctionnelle commune (50) ; et/ou **en ce que** la couche de renfort (52), la couche de camouflage (54), la couche de protection contre les décharges (56), la couche de protection contre les rayonnements et/ou la couche fonctionnelle (50) sont disposées sur le côté de la couche de film plastique (40) opposé à la couche de protection contre la foudre (42).

5. Patch de réparation rapide (36) selon l'une des revendications précédentes, **caractérisé en ce que** la structure en couches (38) est formée selon l'une des séquences suivantes :
- Couche de film plastique (40), couche de protection contre les éclairs (42), couche de fixation (48); ou
- Couche de film plastique (40), couche de liaison (46), couche de protection contre la foudre (42), couche de fixation (48); ou
- Couche de renfort (52) ou couche de camouflage (54) ou couche de protection contre les décharges (56) ou couche de protection contre les rayonnements, couche de film plastique (40), couche de protection contre la foudre (42), couche de fixation (48); ou
- Couche de renfort (52) ou couche de camouflage (54) ou couche de protection contre les décharges (56) ou couche de protection contre les rayonnements, couche de film plastique (40), couche de liaison (46), couche de protection contre la foudre (42), couche de fixation (48); ou
- Couche fonctionnelle (50), couche de film plastique (40), couche de protection contre la foudre (42), couche de fixation (48); ou
- Couche fonctionnelle (50), couche de film plastique (40), couche de liaison (46), couche de protection contre la foudre (42), couche de fixation (48).

6. Patch de réparation rapide (36) selon l'une des revendications précédentes, **caractérisé en ce que** la structure en couches (38) se compose uniquement des couches mentionnées.

7. Patch de réparation rapide (36) selon l'une des revendications précédentes, **caractérisé en ce que** le patch de réparation rapide (36) comprend des moyens d'information (58), de préférence un code QR et/ou une étiquette RFID, grâce auxquels des informations sur le patch de réparation rapide (36) et/ou sur la réparation rapide effectuée à l'aide du patch de réparation rapide (36) peuvent être enregistrées ou consultées.

8. Bande de patchs (62) comprenant une pluralité de patchs de réparation rapide (36) selon l'une des revendications précédentes, les patchs de réparation rapide (36) étant reliés les uns aux autres de manière séparable individuellement au niveau d'une zone de bord (64).

9. Bande de patchs (62) selon la revendication 8, **caractérisée en ce que** la zone de bord (64) est perforée pour permettre la séparation.

10. Bande de patchs (62) selon la revendication 8 ou 9, **caractérisée en ce que** la bande de patchs (62) se présente sous la forme d'un rouleau.

11. Dispositif de réparation (37) comprenant un composant (26), de préférence un composant d'aéronef (12, 14, 16, 18, 20, 22, 24), et un patch de réparation rapide (36) selon l'une des revendications 1 à 6, le composant (26) présentant une couche de recouvrement (34) et une protection de surface contre la foudre (32) située en dessous, ainsi qu'un dommage local (28) sans incidence sur la mécanique des structures, le patch de réparation rapide (36) recouvrant le dommage (28) et étant relié de manière solidaire au composant (26) au moyen de la couche de fixation (48), la couche de film plastique (40) étant reliée de manière solidaire à la couche de recouvrement (34) et est détournée de l'endommagement (28), la couche de protection contre la foudre électriquement conductrice (42) étant disposée entre la couche de film plastique (40) et la protection de surface contre la foudre (32).

12. Aéronef (10) comprenant un patch de réparation rapide (36) et/ou un dispositif de réparation (37) selon l'une des revendications précédentes, dans lequel, de préférence, le composant (26) est situé parmi les aides à la portance (22), volets, becs de bord d'attaque, surfaces de contrôle (24), gouvernails de profondeur, gouvernails latéraux, ailerons, parties de fuselage (12), pales de rotor, ailes (20), nacelles de moteur, empennages horizontaux (18) et/ou empennages verticaux (16).

13. Procédé de réparation rapide pour réparer un dommage localisé et sans incidence sur la structure mécanique (28) d'un composant (26), de préférence d'un composant d'aéronef (12, 14, 16, 18, 20, 22, 24), qui comprend une couche de revêtement (34) et une protection de surface contre la foudre (32) située en dessous, le procédé comprenant:
13.1 La création de surfaces de liaison (60) sur le composant (26) pour un patch de réparation rapide (36) et, le cas échéant, la mise à nu de la protection de surface contre la foudre (32);
13.2 Positionner un patch de réparation rapide (36) selon l'une des revendications précédentes sur la zone endommagée (28);
13.3 Appliquer une couche de fixation (48) uniquement sur une zone périphérique (44) d'une couche de film plastique (40) du patch de réparation rapide (36); et
13.4 Fixation du patch de réparation rapide (36) sur les surfaces de liaison (60) réalisées à l'étape 13.1 en appuyant sur la couche de film plastique (40), en particulier dans la zone périphérique (44), ce qui permet de relier la couche de film plastique (40) à la couche de recouvrement (34) par adhérence et d'établir un contact électriquement conducteur entre une couche de protection contre la foudre (42) du patch de réparation rapide (36) et la protection de surface contre la foudre (32).

14. Procédé de réparation rapide selon la revendication 13, **caractérisé en ce que**, à l'étape 13.1, la réalisation des surfaces de liaison (60) et/ou la mise à nu de la protection de surface contre la foudre (32) s'effectuent par meulage.

15. Utilisation d'un patch de réparation rapide (36) selon l'une des revendications 1 à 6 pour réparer un dommage localisé et sans incidence sur la structure mécanique (28) d'un composant d'aéronef (12, 14, 16, 18, 20, 22, 24).
